# EUROPÄISCHE PATENTSCHRIFT

(11) **EP 3 286 052 B1**
(45) Veröffentlichungstag und Bekanntmachung des Hinweises auf die Patenterteilung: **12.06.2019**
(21) Anmeldenummer: 16720066.6
(22) Anmeldetag: 20.04.2016
(51) Int. Cl.: B60T 13/26, B60T 8/17, B60T 13/38, B60T 13/68

(54) **PARKBREMSEINRICHTUNG FÜR KRAFTFAHRZEUGE**
PARKING BRAKE ARRANGEMENT FOR VEHICLES
ARRANGEMENT DE FREIN DE PARKING POUR VÉHICULES

(30) Priorität: 22.04.2015 DE 102015106146
(43) Veröffentlichungstag der Anmeldung: 28.02.2018
(73) Patentinhaber: KNORR-BREMSE Systeme für Nutzfahrzeuge GmbH, 80809 München (DE)
(72) Erfinder: LEINUNG, Andreas, 81245 München (DE); MICHALSKI, Max, 85579 Neubiberg (DE); USLU, Mustafa, 80997 München (DE)
(86) Internationale Anmeldenummer: PCT/EP2016/058732
(87) Internationale Veröffentlichungsnummer: WO 2016/169970

(56) Entgegenhaltungen:
- DE-A1-102006 054 433
- DE-A1-102013 006 860

## Beschreibung

Die vorliegende Erfindung betrifft eine Parkbremseinrichtung für Kraftfahrzeuge mit wenigstens einer Steuerventileinrichtung, mit wenigstens einem Relaisventil, mit wenigstens einer pneumatischen Bremsvorrichtung und mit wenigstens einem Anhängersteuermodul, wobei mittels der Steuerventileinrichtung das Relaisventil steuerbar ist und wobei mittels des Relaisventils wenigstens die pneumatische Bremsvorrichtung ansteuerbar ist.

Parkbremsen (auch Feststellbremsen genannt) von Nutzfahrzeugen einschließlich Anhängern sowie Schienenfahrzeugen sind heute regelmäßig mit Federspeicherbremszylindern ausgestattet, die in Lösestellung einen Federkompressionsraum mit Druckluft beaufschlagen und dadurch die Feder gespannt halten, während zum Parkbremsen der Federkompressionsraum entlüftet, d. h. mit Atmosphärendruck verbunden wird, so dass der Bremszylinder unter Wirkung der Feder eine Bremskraft erzeugt (vgl., Bosch, Kraftfahrtechnisches Taschenbuch, 22. Auflage, Düsseldorf, 1995, S. 648).

Die DE 10 2013 006 860 A1 zeigt diesbezüglich ein pneumatisches System für Fahrzeuge, insbesondere für Nutzfahrzeuge, umfassend eine elektrische Luftaufbereitungsanlage und ein elektrisches Parkbremssystem. Das pneumatische System weist ein steuerbares Ventil auf, durch dessen Ansteuerung Funktionen der Luftaufbereitungsanlage und Funktionen des Parkbremssystems realisierbar sind.

Aus der DE 10 2009 059 816 B3 und aus der DE 10 2008 007 877 B3 sind bereits gattungsgemäße Parkbremseinrichtungen für Kraftfahrzeuge bekannt.

Aus der WO 2014/009457 A1 ist eine gattungsgemäße Steuerventileinrichtung für eine Parkbremseinrichtung für Kraftfahrzeuge bekannt.

Es ist die Aufgabe der vorliegenden Erfindung, eine Parkbremseinrichtung der eingangs genannten Art in vorteilhafter Weise weiter zu bilden, insbesondere dahingehend, dass eine Parkbremseinrichtung einfacher aufgebaut sein kann und insbesondere auch im Parken eine Druckaufschaltung auf das Anhängersteuermodul einfach möglich ist.

Diese Aufgabe wird erfindungsgemäß gelöst durch eine Parkbremseinrichtung mit den Merkmalen des Anspruchs 1. Danach ist vorgesehen, dass eine Parkbremseinrichtung für Kraftfahrzeuge wenigstens eine Steuerventileinrichtung, wenigstens ein Relaisventil, wenigstens eine pneumatische Bremsvorrichtung und wenigstens ein Anhängersteuermodul aufweist, wobei die Steuerventileinrichtung und das Relaisventil mittels einer Verbindungsleitung miteinander verbunden sind und wobei mittels der Steuerventileinrichtung das Relaisventil steuerbar ist und wobei mittels des Relaisventils wenigstens die pneumatische Bremsvorrichtung ansteuerbar ist, wobei wenigstens eine Zuleitung zum Anhängersteuermodul stromabwärts des Relaisventils abzweigt und dass stromaufwärts des Anhängersteuermoduls ein erstes Select-High-Ventil vorgesehen ist, wobei ein erster Eingang des ersten Select-High-Ventils mit der Zuleitung zum Anhängersteuermodul verbunden ist und wobei ein zweiter Eingang des ersten Select-High-Ventils mit einer Zuleitung verbunden ist, in der ein Abluftventil angeordnet ist, mittels dessen die über die Zuleitung zugeführte Druckluft einstellbar ist.

Die Erfindung basiert auf dem Grundgedanken, unabhängig vom Zustand der Parkbremse das Anhängersteuermodul der Parkbremseinrichtung anzusteuern und zu aktivieren. Dadurch wird das Kraftfahrzeug nicht gebremst und der Anhänger gebremst, wie es für die sogenannte Stretchbrake-Funktion (nur der Anhänger wird gebremst) oder die sogenannte Trailer-Test-Funktion (Anhänger ist ungebremst, um zu prüfen, ob das Zugfahrzeug auch ohne die Anhängerbremse gebremst ist bzw. stehen bleibt) notwendig ist.

Mittels des Abluftventils kann eine weitere Ansteuermöglichkeit für das Anhängersteuermodul bereitgestellt werden, mittels dessen die Ansteuerung des Anhängersteuermoduls einfach eingestellt werden kann. Denkbar ist beispielsweise, dass ein derartiges Ventil eine minimale Hysterese aufweist.

Denkbar ist beispielsweise, dass das Abluftventil eine minimale Reibung für die eingestellten und benötigten Schaltpunkte aufweist und dass die Dichtung seitlich über die Ausgangsöffnung des Abluftventils fahren kann.

Das Abluftventil kann beispielsweise einen Öffnungsdruck von größer 6-7 bar, z.B. bei größer als ca. 6,5 bar aufweisen.

Der Schließdruck zum Entlüftung des Abluftventils kann bei kleiner als 4-5 bar liegen, z.B. bei kleiner als ca. 4,5 bar.

Insbesondere kann vorgesehen sein, dass für eine Trailer-Test-Funktion die Parkbremseinrichtung im Parkzustand ist und das Abluftventil derart geschaltet wird, dass über das Abluftventil Druckluft über das erste Select-High-Ventil zum Anhängersteuermodul gelangt.

Des Weiteren ist möglich, dass das Abluftventil einen Entlüftungsausgang aufweist. Durch den Entlüftungsausgang kann eine gestufte Bremsung über die Park- bzw. Handbremse erreicht werden.

Der Ausgangsdruck des Abluftventils kann über den Entlüftungsausgang eingestellt werden. Insbesondere kann der anliegende Eingangsdruck abgesenkt werden und zwar derart, dass auch Betriebszustände erreicht werden können, bei denen die am anderen Eingang des ersten Select-High-Ventils anliegenden Drücke höher sind als der Ausgangdruck des Abluftventils.

In weiterer Ausgestaltung der Erfindung kann vorgesehen sein, dass ein Eingang des ersten Select-Low-Ventils mit einer die Parkbremseinrichtung versorgenden Druckluftquelle kommenden Zuleitung verbunden ist. Dadurch wird es möglich, diesen Eingang des ersten Select-Low-Ventils mit dem notwendigen Ansprechdruck für die Trailer-Test-Funktion zu versorgen.

Darüber hinaus kann vorgesehen sein, dass das Abluftventil eine Abluftöffnung aufweist. Über die Abluftöffnung kann der Druck, mit dem das Anhängersteuermodul bedruckt werden soll, eingestellt werden.

Denkbar ist aber auch, dass mittels des Abluftventils eine Zuleitung zum Anhängersteuermodul gesperrt werden kann.

Denkbar ist, dass das Abluftventil ein rein mechanisches Ventil ist. Denkbar ist insbesondere, dass das Ventil einen federbelasteten Kolben aufweist. Der einfache Aufbau des Abluftventils aufgrund des Umstandes, dass es sich um ein rein mechanisches Ventil handelt, erlaubt Kostenvorteile. Darüber hinaus kann durch ein derartiges Ventil die Hysterese des Ventils minimiert werden.

Des Weiteren kann vorgesehen sein, dass in der Verbindungsleitung, die die Steuerventileinrichtung und das Relaisventil miteinander verbindet, ein zweites Select-High-Ventil angeordnet ist. Mittels des zweiten Select-High-Ventils kann beispielsweise eine sogenannte Stretchbrake-Funktion realisiert werden.

Insbesondere ist möglich, dass in dieser Verbindungsleitung zwischen Steuerventileinrichtung und dem ersten Select-High-Ventil eine Abzweigungsleitung zum ersten Select-High-Ventil vorgesehen ist. Dadurch wird es beispielsweise möglich, dass während der Stretchbrake-Funktion über die Abzweigungsleitung des Anhängersteuermoduls an wenigstens einen Steuereingang des Anhängersteuermoduls ein Druck anlegbar ist. Dies ermöglicht einen sicheren Betrieb der Parkbremseinrichtung im Fahrzustand, weil aufgrund der Verschaltung der beiden Select-High-Ventile das Relaisventil stets mit dem höheren Betriebsdruck der Parkbremseinrichtung versorgt wird und daher ein Umschalten aus dem Fahrzustand in die Parkbremse nicht stattfinden kann.

Des Weiteren kann vorgesehen sein, dass in der Abzweigungsleitung zwischen dem ersten Select-High-Ventil und dem zweiten Select-High-Ventil ein Select-Low-Ventil angeordnet ist. Dadurch wird es möglich, weitere Ansteuermöglichkeiten für das Anhängersteuermodul bereitzustellen. Insbesondere kann durch dieses Select-Low-Ventil eine Funktionstrennung im Anti-Compound-Fall erreicht werden, so dass z.B. das Anhängersteuermodul bei Anti-Compound nicht beeinflusst wird.

Darüber hinaus ist möglich, dass ein Eingang des Select-Low-Ventils mit einer Versorgungsleitung verbunden ist, die stromabwärts des Relaisventils angeordnet ist. Dadurch wird es möglich, das Anhängersteuermodul mit demselben bzw. im Wesentlichen demselben Betriebsdruck wie die pneumatische Bremsvorrichtung zu versorgen, da sowohl die pneumatische Bremsvorrichtung als auch das Anhängersteuermodul über Versorgungsleitungen ansteuerbar sind, die stromabwärts des Relaisventils abzweigen und deshalb denselben Betriebsdruck haben. Dadurch wird es beispielsweise möglich, den sogenannten Jack-Knife-Effekt (hervorgerufen durch unterschiedliche Bremswirkung am Zugfahrzeug und am Anhänger) zuverlässig und einfach zu vermeiden.

Insbesondere kann vorgesehen sein, dass während der Stretchbrake-Funktion mittels des Abluftventils die über die Zuleitung zugeführte Druckluft auf einen Druck niedriger als der Arbeitsdruck einstellbar ist. Diese Wahl des Drucks ermöglicht einen sicheren Betrieb der Parkbremseinrichtung und verhindert ein Umschalten der pneumatischen Bremsvorrichtung vom Fahrzustand in den Parkbremszustand.

Ein Eingang des zweiten Select-High-Ventils kann mit einer Zuleitung verbunden sein, die an den Ausgang eines zweiten Select-Low-Ventils angeschlossen ist. Dadurch wird es möglich, das Anhängersteuermodul über weitere pneumatische Systeme des Kraftfahrzeugs anzusteuern.

Weitere Einzelheiten und Vorteile der vorliegenden Erfindung sollen nun anhand von in den Zeichnungen dargestellten Ausführungsbeispielen näher erläutert werden.

Es zeigen:
- Figur 1:: eine schematische Darstellung eines ersten Ausführungsbeispiels für eine erfindungsgemäße Parkbremseinrichtung mit einem Ausführungsbeispiel einer erfindungsgemäßen Steuerventileinrichtung in der Parkstellung;
- Figur 2:: eine schematische Darstellung der in Figur 1 gezeigten Parkbremseinrichtung mit einem Ausführungsbeispiel einer erfindungsgemäßen Steuerventileinrichtung in der Fahrstellung; und
- Figur 3:: eine schematische Darstellung der in Figur 1 gezeigten Parkbremseinrichtung mit einem Ausführungsbeispiel einer erfindungsgemäßen Steuerventileinrichtung in der Stellung für die Stretchbrake-Funktion.

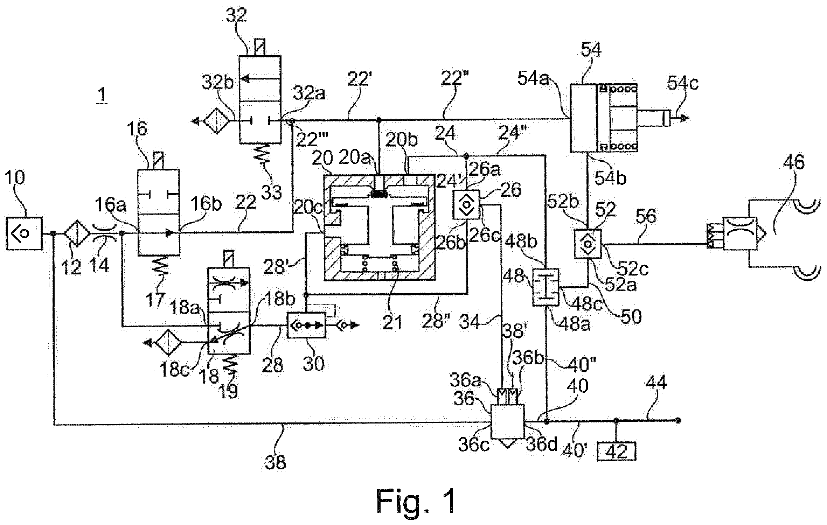

Figur 1 zeigt eine schematische Darstellung eines ersten Ausführungsbeispiels einer erfindungsgemäßen Parkbremseinrichtung 1 für Kraftfahrzeuge.

Die Parkbremseinrichtung 1 weist ein Rückschlagventil 10 auf, mittels dessen die Parkbremseinrichtung 1 an einer nicht näher dargestellten Druckluftversorgung angeschlossen ist.

Stromabwärts des Rückschlagventils 10 können eine Filtereinheit 12 und eine Drossel 14 vorgesehen sein.

Die Parkbremseinrichtung 1 hat weiter ein erstes elektrisch steuerbares Magnetventil 16 und ein zweites elektrisch steuerbares Magnetventil 18, an deren Ausgängen als Steuerventileinrichtung 20 ein pneumatisch steuerbares Steuerventil 20 angeschlossen ist.

Die beiden Magnetventile 16 und 18 sind über das Rückschlagventil 10 mit der nicht dargestellten Druckluftquelle des Fahrzeugs verbunden, über die Druckluft zuführbar ist.

Beide Magnetventile 16 und 18 werden jeweils durch eine Feder 17 bzw. 19 in eine Ruhelage gebracht.

Das Magnetventil 16 ist als sogenanntes 2/2-Wegeventil ausgebildet. Durch die Feder 17 ist das Magnetventil 16 monostabil und zwar stabil in der Ruhelage.

Grundsätzlich ist aber auch denkbar, dass das Magnetventil 16 als 3/2-Wegeventil ausgebildet ist. Eine derartige Konfiguration ist beispielsweise in der DE 10 2008 007 877 B3 gezeigt.

Das Magnetventil 18 ist ein sogenanntes 3/2-Wegeventil. Es ist zugleich als Steuer- und Entlüftungsventileinrichtung mit integrierter Drossel ausgebildet. Durch die Feder 19 ist das Magnetventil 18 monostabil und zwar stabil in der Ruhelage.

Denkbar ist auch, dass das Magnetventil 18 als einfaches monostabiles 2/2-Wegeventil ausgebildet sein kann (dann ohne Entlüftungsfunktion).

Ebenso wird das pneumatisch steuerbare Steuerventil 20 durch wenigstens eine Feder 21 in eine Ruhelage gebracht.

Das Steuerventil 20 ist als ein 3/2-Wegeventil ausgeführt. Es ist jedoch durch die Art seiner Verschaltung bistabil ausgelegt.

In Figur 1 sind jeweils die Ruhelagen dargestellt, bei denen die entsprechenden Ventile 16, 18 bzw. 20 deaktiviert sind.

Die Parkbremseinrichtung 1 befindet sich dabei im Parkmodus.

Das erste Magnetventil 16 hat einen Eingang 16a und einen Ausgang 16b.

In ähnlicher Weise hat das zweite Magnetventil 18 einen Eingang 18a, einen Ausgang 18b und einen Entlüftungsausgang 18c.

In der dargestellten Ruhelage verbindet das Magnetventil 16 den Eingang 16a mit dem Ausgang 16b.

Das zweite Magnetventil 18 sperrt in der dargestellten Ruhestellung den Eingang 18a ab und verbindet den Ausgang 18b mit dem Entlüftungsausgang 18c. In der aktivierten Position verbindet das zweite Magnetventil 18 dagegen den Eingang 18a mit dem Ausgang 18b, während der Entlüftungsausgang 18c abgesperrt ist.

Das pneumatisch gesteuerte Steuerventil 20 hat ebenfalls drei Anschlüsse und zwar einen Eingang 20a, einen Ausgang 20b und einen weiteren Anschluss 20c. Der Eingang 20a ist über eine Verbindungsleitung 22, 22' mit dem Ausgang 16b des ersten Magnetventils 16 verbunden. Der Ausgang 20b ist über eine Verbindungsleitung 24, 24' mit einem Eingang 26a eines Select-High-Ventils 26 verbunden, während der Anschluss 20c über eine Verbindungsleitung 28, 28' mit dem Ausgang 18b des zweiten Magnetventils 18 verbunden ist.

Das pneumatisch steuerbare Steuerventil 20 sperrt in der abgebildeten Ruhestellung den Eingang 20a ab und verbindet den Ausgang 20b mit dem Anschluss 20c. In der aktivierten Stellung des Steuerventils 20 ist dagegen der Eingang 20a mit dem Ausgang 20b verbunden und der Anschluss 20c ist abgesperrt.

Das pneumatisch steuerbare Steuerventil 20 kann ein normales Pneumatikventil sein. Es kann auch ein pneumatisch steuerbares Servo-Ventil sein. Schließlich kann das Steuerventil 20 auch elektrisch steuerbar sein, d. h. es kann ein bistabiles elektrisch steuerbares Magnetventil sein.

Von der Leitung 28 zweigt eine weitere Leitung 28" ab, die mit dem Eingang 26b des Select-High-Ventils 26 verbunden ist.

In der Leitung 28 ist ferner ein Schnellentlüftungsventil 30 vorgesehen.

Die Verbindungsleitung 22"', die von der Leitung 22 abzweigt, führt zu einem Entlüftungsventil 32, das ein 2/2-Wegeventil (Magnetventil) ist, und ist mit dessen Eingang 32a verbunden. Das Entlüftungsventil 32 weist weiter einen Entlüftungsausgang 32b auf. In der dargestellten Stellung ist der Entlüftungsausgang 32b gesperrt. Das Entlüftungsventil 32 wird über die Feder 33 in eine Ruhelage gebracht. Durch die Feder 33 ist das Magnetventil 32 monostabil und zwar stabil in der Ruhelage.

Vom Ausgang 26c des Select-High-Ventils 26 verbindet eine Leitung 34 das Select-High-Ventil 26 mit einem Steuereingang 36a eines Relaisventils 36.

Ein weiterer Steuereingang 36b des Relaisventils 36 ist mit einer pneumatischen Leitung 38' verbunden, die eine pneumatische Steuerleitung vom Bremspedal des Fahrzeugs ist und die mit Druck der Betriebsbremse des Fahrzeugs beaufschlagt ist.

Der Anschluss 36c des Relaisventils 36 ist über eine Verbindungsleitung 38 mit dem Rückschlagventil 10 verbunden und hierüber an die Druckluftversorgung angeschlossen.

Der Ausgang 36d des Relaisventils 36 ist mit einer Zuleitung 40, 40' mit einer pneumatischen Bremsvorrichtung 42 für das Kraftfahrzeug bzw. Zugfahrzeug und mit einer weiteren Leitung 44 verbunden.

Die pneumatische Bremsvorrichtung 42 des Kraftfahrzeugs bzw. Zugfahrzeugs kann eine Druckkammer eines Federspeicher-Bremszylinders (nicht näher dargestellt) aufweisen. Die Federspeicherbremse ist dann gelöst, wenn die genannte Druckkammer des Federspeicher-Bremszylinders mit Druckluft beaufschlagt ist. Umgekehrt ist die Parkbremse durch die Feder des Federspeicher-Bremszylinders aktiviert, wenn die genannte Druckkammer entlüftet ist.

Stromabwärts des Relaisventils 36 ist neben der pneumatischen Bremsvorrichtung 42 für das Kraftfahrzeug bzw. Zugfahrzeug auch ein Anhängersteuermodul 46 angeordnet.

Das Anhängersteuermodul 46 ist dabei wie folgt angeschlossen:
Von der Leitung 40 zweigt eine Leitung 40" ab, die mit einem Eingang 48a eines Select-Low-Ventils 48 verbunden ist. Ein zweiter Eingang 48b des Select-Low-Ventils 48 ist über die Leitung 24, 24" mit dem Eingang 20b des Steuerventils 20 verbunden.

Ein Ausgang 48c des Select-Low-Ventils 48 ist über eine Leitung 50 mit einem Eingang 52a eines Select-High-Ventils 52 verbunden.

Ein weiterer Eingang 52b des Select-High-Ventils 52 ist mit einer Leitung 22" verbunden, in der ein Abluftventil 54 (kann wie Magnetventil 18 ausgeführt sein) angeordnet ist. In der gezeigten Stellung sind die Anschlüsse 54a, 54b miteinander verbunden.

Über den Entlüftungsausgang 54c kann entlüftet werden. Das Abluftventil 54 ist als rein mechanisches Ventil ausgeführt.

Das Anhängersteuermodul 46 ist wiederum über eine Leitung 56 am Anschluss 52c des Select-High-Ventils 52 angeschlossen.

Somit ist die Parkbremseinrichtung 1 derart beschaffen, dass in der Verbindungsleitung 24, 34, die die Steuerventileinrichtung 20 und das Relaisventil 36 miteinander verbindet, das erste Select-High-Ventil 26 angeordnet ist, wobei in dieser Verbindungsleitung 24 zwischen Steuerventileinrichtung 20 und dem ersten Select-High-Ventil 26 die Abzweigungsleitung 24" zum Anhängersteuermodul 46 vorgesehen ist und wobei in dieser Abzweigungsleitung 24", 50, 56 stromaufwärts des Anhängersteuermoduls 46 das zweite Select-High-Ventil 52 vorgesehen ist.

In der Abzweigungsleitung 24" ist zwischen dem ersten Select-High-Ventil 26 und dem zweiten Select-High-Ventil 52 das Select-Low-Ventil 48 angeordnet.

Der Eingang 48a des Select-Low-Ventils 48 ist mit der Versorgungsleitung 40" verbunden, die stromabwärts des Relaisventils 36 angeordnet ist.

Der Eingang 52b des zweiten Select-High-Ventils 52 ist mit der Zuleitung 22" verbunden, in der das Abluftventil 54 angeordnet ist, mittels dessen die über die Zuleitung 22" zugeführte Druckluft einstellbar ist.

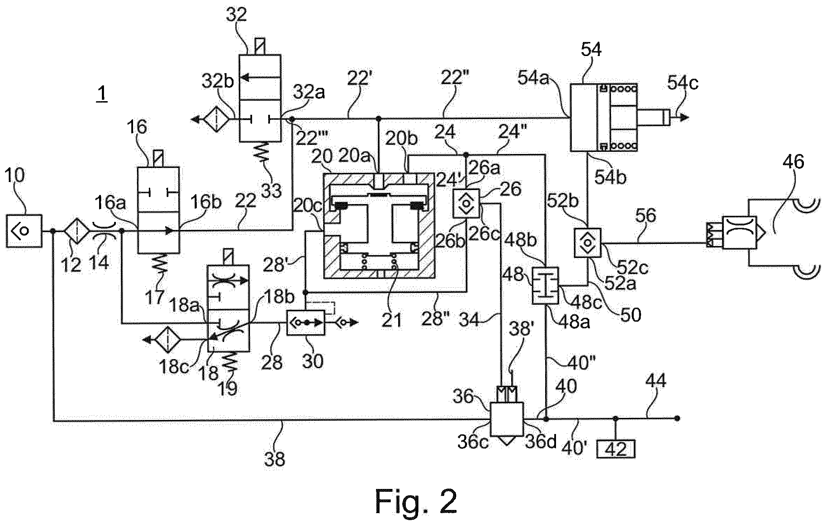

Im Folgenden wird die Wirkungsweise der Parkbremseinrichtung 1 gemäß Figur 1 und Figur 2 erläutert.

Die Einrichtung hat zwei sichere, stabile Zustände, nämlich den normalen Fahrzustand und den Zustand der aktivierten Parkbremse (wie in Figur 1 gezeigt, auch Parkposition oder Parkzustand genannt). Bei Ausfall der elektrischen Versorgung wird der unmittelbar dem Ausfall vorhergehende Zustand stabil beibehalten.

Die Sicherheitsfunktion wird durch das bistabile Steuerventil 20 realisiert. Dieses Steuerventil 20 wird in der in Figur 1 dargestellten Parkstellung durch die Feder 21 gehalten. Die Anschlüsse 20b und 20c des Steuerventils 20 sind verbunden und über das Schnellentlüftungsventil 30 und das zweite Magnetventil 18 über den Eingang 18b zu dessen Entlüftungsausgang 18c hin entlüftet.

Das Steuerventil 20 ist deaktiviert und durch die Feder 21 in die dargestellte Stellung gebracht. Dies ist einer der zwei stabilen Zustände des Steuerventils 20.

In der Parkposition ist auf der Leitung 38 normalerweise kein Druck (Betriebsbremse deaktiviert (sofern der Fahrer nicht bei eingelegter Handbremse auf dem Bremspedal steht)), so dass an die pneumatischen Steuereingänge 36a und 36b des Relaisventils 36 Atmosphärendruck gelangt. Dieses ist damit entlüftet, so dass auch die Federkammer des Federspeicher-Bremszylinders der pneumatischen Bremsvorrichtung 42 entlüftet ist und damit die Parkbremse angelegt bzw. aktiviert ist.

Bei deaktivierter Parkbremse, d. h. im Fahrzustand wie in Figur 2 gezeigt, ist das Steuerventil 20 durchgeschaltet, d. h. aktiviert. Der Eingang 20a ist dann mit dem Ausgang 20b verbunden.

Über das aktivierte Steuerventil 20 gelangt Druck von der Druckmittelquelle über das Rückschlagventil 10 auch zum Steuereingang 36a des Relaisventils 36, welches durchschaltet und damit die Federkammer des Federspeicher-Bremszylinders der Betriebsbremse des Kraftfahrzeugs bzw. Zugfahrzeugs über die Leitung 40, 40' mit Druck beaufschlagt und damit die Betriebsbremse löst. Somit ist die Sicherheitsfunktion realisiert, d. h. beide beschriebenen Betriebszustände sind jeweils für sich stabil, unabhängig von dem Zustand der Stromversorgung der Magnetventile 16 und 18.

### Umschalten von Parkbremse auf Fahrzustand

Durch Betätigen des zweiten Magnetventils 18 wird dessen Eingang 18a mit dem Ausgang 18b verbunden. Damit gelangt Druckluft aus der Druckmittelquelle über das Rückschlagventil 10 zum Anschluss 20c des Steuerventils 20, von dessen Ausgang 20b zur Leitung 24. Gleichzeitig liegt aber bereits hoher Druck am Select-High-Ventil 26 an, der über die Leitung 28" zugeführt wird.

Da auch das Magnetventil 16 durchgeschaltet ist und am Eingang 20a Druck anliegt, schaltet das Steuerventil 20 durch und der Eingang 20a wird mit dem Ausgang 20b verbunden.

Das Ventil 18 kann dann wieder in die Ruheposition zurückkehren bzw. es ist unerheblich für den Fahrzustand, welche Position das Ventil 18 einnimmt.

Über das Select-High-Ventil 26 gelangt der vom Ausgang 20b kommende Druck an den Steuereingang 36a des Relaisventils 36, das durchschaltet und somit den Druck von seinem Eingang 36c zur Federkammer des Federspeicher-Bremszylinders über die Leitung 40, 40' gelangen lässt, so dass die Betriebsbremse des Kraftfahrzeugs bzw. Zugfahrzeugs gelöst wird. Das Steuerventil 20 ist dann in der zweiten, durch Druck gehaltenen stabilen Position.

### Umschalten vom Fahrzustand zur Parkbremse

Das Umschalten vom Fahrzustand zur Parkbremse erfolgt durch das erste Magnetventil 16 und durch das zweite Magnetventil 18, das Schnellentlüftungsventil 30 sowie über das Entlüftungsventil 32. Wird das erste Magnetventil 16 aktiviert, so werden sein Eingang 16a und sein Ausgang 16b abgesperrt. Außerdem ist das zweite Magnetventil 18 derart geschaltet, dass der Eingang 18a gesperrt und die Ausgänge 18b und 18c miteinander verbunden sind. Somit kann mit dem Abheben des Ventils 20 von seinem unteren Ventilsitz der Druck auch über das Schnellentlüftungsventil 30 und den Entlüftungsausgang 18c des Magnetventils 18 entweichen. Da auch das Entlüftungsventil 32 derart geschaltet wird, dass der Eingang 32a und der Ausgang 32b miteinander verbunden sind, so dass über den Entlüftungsausgang 32b entlüftet werden kann, sinkt der Druck in den zum Steuerventil 20 führenden Leitungen noch schneller ab.

Sobald dieser Druck einen vorgegebenen Schwellwert erreicht hat, der unter anderem durch die Kraft der Feder 21 einstellbar ist, schaltet das Steuerventil 20 in die in Figur 1 gezeigte Ruhestellung zurück.

### Stretchbrake-Funktion

Bei dieser Funktion (auch Streckbrems-Funktion genannt) wird nur die Bremse des Anhängers über das Anhängersteuermodul 46 aktiviert. Die pneumatische Bremsvorrichtung 42 wird im Fahrzustand gehalten.

Mit anderen Worten ist die Steuerventileinrichtung 20 derart geschaltet, dass das Relaisventil 36 durchgeschaltet ist und über die Leitung 38 der Betriebsdruck an der pneumatischen Bremsvorrichtung 42 anliegt und diese dadurch geöffnet ist, also im Fahrzustand ist.

Während der Ausführung der Stretchbrake-Funktion ist über die Abzweigungsleitung 56 des Anhängersteuermoduls 46 an wenigstens einen Steuereingang des Anhängersteuermoduls 46 ein Druck angelegt.

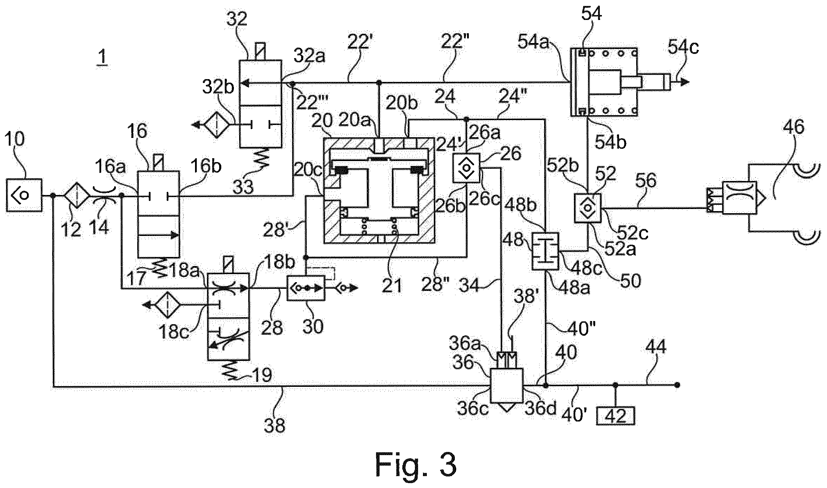

Figur 3 zeigt eine schematische Darstellung der in Figur 1 gezeigten Parkbremseinrichtung mit einem Ausführungsbeispiel einer erfindungsgemäßen Steuerventileinrichtung in der Stellung für die Stretchbrake-Funktion.

Dabei ist das Magnetventil 16 geschlossen und die Magnetventile 18 und 32 sind geöffnet.

Das Steuerventil 20 ist geöffnet, d.h. die Anschlüsse 20a und 20b sind miteinander verbunden.

Über die Leitung 28" liegt der Betriebsdruck an dem Steuereingang 36a des Relaisventils 36 an, so dass dieses durchschaltet und die pneumatische Bremsvorrichtung 42 über die Leitung 38 mit Druckluft versorgt wird und damit geöffnet ist.

In der Leitung 24 liegt Druck an. Auch in der Abzweigungsleitung 56 des Anhängersteuermoduls 46 liegt somit Druck an, wobei der in der Abzweigungsleitung 56 anliegende Druck identisch zu dem in der Leitung 24 anliegenden Druck ist.

Denn während der Ausführung der Stretchbrake-Funktion wird mittels des Abluftventils 54 die über die Zuleitung 22" zugeführte Druckluft beispielsweise auf einen Druck von weniger als 4 bar eingestellt, z.B. auf einen Druck von ca. 2 bar bis ca. 3 bar.

Da am Select-High-Ventil 26 über den Eingang 26b der höhere Betriebsdruck von ca. 12 bar anliegt, genießt dieser Vorrang im Select-High-Ventil 26.

Weil im Select-Low-Ventil 48 am Ausgang 48a auch der höhere Betriebsdruck von 12 bar anliegt, wird das Select-Low-Ventil 48 durchgeschaltet und die in der Leitung 24, 24" befindliche Druckluft gelangt zum Anhängersteuermodul, so dass dieses aktiviert wird und die Bremse des Anhängers bremst. Die Leitung 22" wird über das Magnetventil 22" und das Abluftventil 54 entlüftet.

### Ungebremster Parkzustand des Anhängers

Beispielsweise befindet sich die Parkbremseinrichtung 1 in der Parkposition bzw. im Parkzustand (siehe vorstehende Beschreibung).

Über das Abluftventil 54 wird Druckluft zum Anhängersteuermodul 46 durchgeschaltet.

Das Abluftventil 54 kann im Parkzustand derart geschaltet sein, dass das Anhängersteuermodul 46 permanent mit Druck beaufschlagt ist.

Mit dem Abluftventil 54 steht ein Ventil zur Verfügung, das bei höheren Drücken den Druck vom Eingang 54a zum Ausgang 54b durchlässt und über das Select-High-Ventil 52 den Anhänger entbremst.

Das Abluftventil 54 weist eine minimale Reibung für die eingestellten und benötigten Schaltpunkte auf. Die Dichtung des Abluftventils kann seitlich über die Ausgangsöffnung 54b des Abluftventils fahren und dadurch den die Öffnung der Ausgangsöffnung 54b einstellen.

Das Abluftventil 54 kann beispielsweise einen Öffnungsdruck von größer 6-7 bar, z.B. bei größer als ca. 6,5 bar aufweisen.

Der Schließdruck zum Entlüftung des Abluftventils 54 kann bei kleiner als 4-5 bar liegen, z.B. bei kleiner als ca. 4,5 bar.

Im Ergebnis wird somit die Parkbremse am Trailer bzw. Anhänger gelöst.

### Zusätzliche Funktion "gestufte Bremsung"

Über das Ventil 54 und den Entlüftungsausgang 54c kann die Leitung 54b entlüftet werden. Dadurch wird eine gestufte Bremsung über die Park- bzw. Handbremse ermöglicht.

Durch die Entlüftung wird erreicht, dass über das Select-High-Ventil 52 der von den Magnetventilen geregelte Druck, der von der Steuerventileinrichtung 20, insbesondere der über den Ausgang 20b und das Relaisventil 36 kommende Druck, zur Ansteuerung des Anhängersteuermoduls 46 dient und nicht durch den Ausgangsdruck des Ventils 54 unterdrückt wird.

## Patentansprüche

1. Parkbremseinrichtung (1) für Kraftfahrzeuge mit wenigstens einer Steuerventileinrichtung (20), mit wenigstens einem Relaisventil (36), mit wenigstens einer pneumatischen Bremsvorrichtung (42) und mit wenigstens einem Anhängersteuermodul (46), wobei die Steuerventileinrichtung (20) und das Relaisventil (36) mittels einer Verbindungsleitung (24, 34) miteinander verbunden sind und wobei mittels der Steuerventileinrichtung (20) das Relaisventil (36) steuerbar ist und wobei mittels des Relaisventils (36) wenigstens die pneumatische Bremsvorrichtung (42) ansteuerbar ist, wobei stromaufwärts des Anhängersteuermoduls (46) ein erstes Select-High-Ventil (52) vorgesehen ist, **dadurch gekennzeichnet, dass** wenigstens eine Zuleitung (40", 50) zum Anhängersteuermodul (46) stromabwärts des Relaisventils (36) abzweigt, und dass ein erster Eingang (52a) des ersten Select-High-Ventils (52) mit der Zuleitung (40", 50) zum Anhängersteuermodul (46) verbunden ist und wobei ein zweiter Eingang (52b) des ersten Select-High-Ventils (52) mit einer Zuleitung (22") verbunden ist, in der ein Abluftventil (54) angeordnet ist, mittels dessen die über die Zuleitung (22") zugeführte Druckluft einstellbar ist.

2. Parkbremseinrichtung (1) nach Anspruch 1, **dadurch gekennzeichnet, dass** die Parkbremseinrichtung (1) im Parkzustand das Abluftventil (54) derart schaltet, dass über das Abluftventil (54) Druckluft über das erste Select-High-Ventil (52) zum Anhängersteuermodul (46) gelangt.

3. Parkbremseinrichtung (1) nach Anspruch 1 oder Anspruch 2, **dadurch gekennzeichnet, dass** das Abluftventil (54) einen Entlüftungsausgang (54c) aufweist.

4. Parkbremseinrichtung (1) nach einem der vorhergehenden Ansprüche, **dadurch gekennzeichnet, dass** das Abluftventil (54) ein rein mechanisches Ventil ist.

5. Parkbremseinrichtung (1) nach einem der vorhergehenden Ansprüche, **dadurch gekennzeichnet, dass** in der Verbindungsleitung (24, 34), die die Steuerventileinrichtung (20) und das Relaisventil (36) miteinander verbindet, ein zweites Select-High-Ventil (26) angeordnet ist.

6. Parkbremseinrichtung (1) nach Anspruch 5, **dadurch gekennzeichnet, dass** in dieser Verbindungsleitung (24) zwischen Steuerventileinrichtung (20) und dem ersten Select-High-Ventil (26) eine Abzweigungsleitung (24") zum ersten Select-High-Ventil (52) vorgesehen ist.

7. Parkbremseinrichtung (1) nach Anspruch 6, **dadurch gekennzeichnet, dass** in der Abzweigungsleitung (24") zwischen dem ersten Select-High-Ventil (26) und dem zweiten Select-High-Ventil (52) ein Select-Low-Ventil (48) angeordnet ist.

8. Parkbremseinrichtung (1) nach Anspruch 7, **dadurch gekennzeichnet, dass** ein Eingang (48a) des Select-Low-Ventils (48) mit einer Versorgungsleitung (40") verbunden ist, die stromabwärts des Relaisventils (36) angeordnet ist.

## Claims

1. A parking brake arrangement (1) for motor vehicles, having at least one control valve device (20), at least one relay valve (36), at least one pneumatic brake device (42) and at least one trailer control module (46), the control valve device (20) and the relay valve (36) being connected to one another by means of a connecting line (24, 34), the relay valve (36) being controllable by means of the control valve device (20) and at least the pneumatic brake device (42) being actuatable by means of the relay valve (36), a first select-high valve (52) being provided upstream of the trailer control module (46), **characterised in that** at least one feed line (40", 50) to the trailer control module (46) branches off downstream of the relay valve (36) and that a first inlet (52a) of the first select-high valve (52) is connected to the feed line (40", 50) to the trailer control module (46) and a second inlet (52b) of the first select-high valve (52) being connected to a feed line (22") in which is arranged an exit-air valve (54) by means of which it is possible to adjust the compressed air supplied via the feed line (22").

2. A parking brake arrangement (1) according to claim 1, **characterised in that** in the parking state the parking brake arrangement (1) switches the air-exit valve (54) in such a way that owing to the exit-air valve (54) compressed air reaches the trailer control model (46) via the first select-high valve (52).

3. A parking brake arrangement (1) according to claim 1 or claim 2, **characterised in that** the exit-air valve (54) has a deaeration outlet (54c).

4. A parking brake arrangement (1) according to any of the preceding claims, **characterised in that** the exit-air valve (54) is a purely mechanical valve.

5. A parking brake arrangement (1) according to any of the preceding claims, **characterised in that** a second select-high valve (26) is arranged in the connecting line (24, 34) that connects the control valve device (20) and the relay valve (36) to one another.

6. A parking brake arrangement (1) according to claim 5, **characterised in that** a branch line (24") to the first select-high valve (52) is provided in this connecting line (24) between the control valve device (20) and the first select-high valve (26).

7. A parking brake arrangement (1) according to claim 6, **characterised in that** a select-low valve (48) is arranged in the branch line (24") between the first high-select valve (26) and the second high-select valve (52)

8. A parking brake arrangement (1) according to claim 7, **characterised in that** an inlet (48a) of the select-low valve (48) is connected to a supply line (40"), which is arranged downstream of the relay valve (36).

## Revendications

1. Dispositif (1) de frein de stationnement de véhicule automobile, comprenant au moins un dispositif (20) de vanne de commande, comprenant au moins une vanne (36) relais, comprenant au moins un système (42) pneumatique de frein et comprenant au moins un module (46) de commande de remorque, le dispositif (20) de commande de vanne et la vanne (36) relais étant reliés entre eux au moyen d'une ligne (24, 34) de liaison et dans lequel la vanne (36) relais peut être commandée au moyen du dispositif (20) de vanne de commande et dans lequel au moins le système (42) pneumatique de frein peut être commandé au moyen de la vanne (36) relais, dans lequel une première vanne (52) select-high est prévue en amont du module (46) de commande de remorque, **caractérisé en ce qu'**au moins un conduit (40'', 50) d'arrivée bifurque vers le module (46) de commande de remorque, en aval de la vanne (36) relais et **en ce qu'**une première entrée (52a) de la première vanne (52) select-high est reliée au conduit (40'', 50) d'arrivée allant au module (46) de commande de remorque et dans lequel une deuxième entrée (52b) de la première vanne: (52) select-high est reliée au conduit (22'') d'arrivée, dans lequel est monté une vanne (54) de purge, au moyen de laquelle l'air comprimé envoyé par le conduit (22'') d'arrivée est réglable.

2. Dispositif (1) de frein de stationnement suivant la revendication 1, **caractérisé en ce que** le dispositif (1) de frein de stationnement commute à l'état de stationnement la vanne (54) de purge, de manière à ce que, par la vanne (54) de purge, de l'air comprimé arrive au module (46) de commande de remorque en passant par la première vanne (52) select-high.

3. Dispositif (1) de frein de stationnement suivant la revendication 1 ou la revendication 2, **caractérisé en ce que** la vanne (54) de purge a une sortie (54c) de mise à l'atmosphère.

4. Dispositif (1) de frein de stationnement suivant l'une des revendications précédentes, **caractérisé en ce que** la vanne (54) de purge est une vanne purement mécanique.

5. Dispositif (1) de frein de stationnement suivant l'une des revendications précédentes, **caractérisé en ce qu'**une deuxième vanne (26) select-high est montée dans la ligne (24, 34) de liaison, qui relie entre eux le dispositif (20) de vanne de commande et la vanne (36) relais.

6. Dispositif (1) de frein de stationnement suivant la revendication 5, **caractérisé en ce qu'**une ligne (24'') de bifurcation, menant à la première vanne (52) select-high, est prévue dans la ligne (24) de liaison entre le dispositif (20) de vanne de commande et la première vanne (26) select-high.

7. Dispositif (1) de frein de stationnement suivant la revendication 6, **caractérisé en ce qu'**une vanne (48) Select-Low est montée dans la ligne (24'') de bifurcation entre la première vanne (26) select-high et la deuxième vanne (52) select-high.

8. Dispositif (1) de frein de stationnement suivant la revendication 7, **caractérisé en ce qu'**une entrée (48a) de la vanne (48) select-low est reliée à une ligne (40'') d'alimentation, qui est montée en aval de la vanne (36) relais.
